# EUROPEAN PATENT SPECIFICATION

(11) **EP 3 482 617 B1**
(45) Date of publication and mention of the grant of the patent: **19.08.2020**
(21) Application number: 18205199.5
(22) Date of filing: 08.11.2018
(51) Int. Cl.: A01C 7/08, A01C 15/00

(54) **HOPPER FOR A STRIP TILLAGE MACHINE, STRIP TILLAGE MACHINE PROVIDED WITH A SECONDARY SEED HOPPER AND METHOD OF OPERATION**
BEHÄLTER FÜR EINE STREIFENBODENBEARBEITUNGSMASCHINE, STREIFENBODENBEARBEITUNGSMASCHINE MIT EINEM SEKUNDÄREN SAATGUTBEHÄLTER UND VERFAHREN ZUM BETRIEB
RÉSERVOIR POUR MACHINE DE TRAVAIL DU SOL EN BANDE, MACHINE DE TRAVAIL DU SOL EN BANDE POURVUE D'UN RÉSERVOIR DE GRAINES SECONDAIRE ET PROCÉDÉ DE FONCTIONNEMENT

(30) Priority: 09.11.2017 GB 201718516
(43) Date of publication of application: 15.05.2019
(73) Proprietor: MZURI-AGRO SP. Z O.O sp. k., 89-110 Sadki (PL)
(72) Inventor: LOLE, Christopher Martin, Peopleton, Worcestershire WR10 2BF (GB)
(74) Representative: Patpol Kancelaria Patentowa Sp. z o.o.

(56) References cited:
- US-A1- 2003 177 970
- US-A1- 2008 295 751

## Description

This invention relates to a seed hopper for a strip tillage machine and to a strip tillage machine provided with a secondary seed hopper. The invention also relates to a method of operating such a hopper and strip tillage machine.

Strip tillage is an agricultural method in which previously undisturbed soil, for example still carrying the stubble of a previous crop, is operated on by tines which break up the soil only where seed is to be planted, creating shallow trenches of broken soil with strips of still undisturbed soil therebetween. The tines are followed by means for sowing seed into the respective trenches. The seed sowing may be effected by second tines provided with respective associated seed delivery tubes. The seed sowing means is followed by one or more devices for levelling the soil in which the seed has been sowed. This method and its associated apparatus addresses the problem of having to make successive passes over the soil with different machinery.

A strip tillage machine is known, for example, from EP2436250 and comprises a plurality of soil loosening members (first tines) spaced apart from one another transversely of the apparatus for creating a plurality of zones of loosened soil alongside one another, followed by respective seed delivery members (second tines) for extending into the zones of loosened soil and discharging seed therein at a predetermined depth.

In conventional strip tillage machines, seed to be sown is stored in a hopper and distributed to the various seed delivery members through a seed distribution head by means of a pneumatic seed delivery system. Such a seed delivery system works well for many types of seed, especially relatively small seeds. However, the system does not work well for seeds which require precision planting, for example relatively large seeds such as maize and sunflower seeds which need to be planted with an even spacing. Such seeds need a precision metering system in order to distribute the seeds accurately. Precision metering systems are commercially available, but it has been found to be problematic to convey the seeds to the metering system at a suitable delivery rate. One possibility is to provide each seed delivery member with a respective seed hopper in the vicinity, for example above, the seed delivery member. While providing each seed delivery member with a separate seed hopper would provide satisfactory seed delivery to the metering system, the size of a hopper capable of holding a sufficient supply of seed would, especially when full of seed, increase the load above the seed delivery member to an unacceptable level resulting in damage to the machine. In practice, though, it is generally not possible to provide separate hoppers for each seed delivery member because there is insufficient space for hoppers of adequate capacity.

One solution to the problem of providing a separate seed hopper for each seed delivery member is to provide a conventional primary seed hopper and a seed distribution system which conveys seed to each of a plurality of separate secondary seed hoppers, a secondary seed hopper being provided for each seed delivery member. In principle, such an arrangement overcomes the problem with regard to seed hoppers, but in practice the arrangement gives rise to further problems relating to the rate at which seeds are delivered from the primary seed hopper to each of the secondary seed hoppers because pneumatic seed distribution systems are notoriously difficult to design and control. For example, the flow rate of air through the distribution system can vary depending on the state of operation of the machine or the motive unit towing the machine and also on the amount of seed present in the secondary seed hopper. Any interruption or reduction in air flow rate can result in seed no longer being entrained in the air flow and this can lead to blockage of the seed distribution system. Similarly, when the secondary seed hopper becomes full of seed, the accumulated seed can itself cause an interruption or reduction in air flow rate and this can again lead to blockage of the seed distribution system.

US 2003/177970 discloses a particulate distribution system for transporting seed into a plurality of metering bins, the system including a manifold duct, wherein the seed can be transported therethrough and a plurality of particulate flow diverting structures that extend from the manifold into each metering bin.

US2008/0295751 discloses a pneumatically powered seed delivery system for an agricultural planter including and air-lock between a main seed hopper and the forced air delivery system. The air lock accurately measures the seed and isolates the interior of the seed hopper from the forced air delivery system. Seed is delivered to individual planter row units, each including an air horn having a buffer reservoir for storing and feeding seed to the associated seed meter under controlled conditions, and a seed routing conduit for carrying seed not deposited in a given seed meter to the other row units downline.

It is therefore an object of the present invention to provide a seed hopper for a strip tillage machine and a strip tillage machine with a secondary seed hopper and which overcomes, or at least ameliorates, the abovementioned problems together with associated methods.

According to one aspect of the present invention there is provided a seed hopper according to claim 1.

The U-shaped conduit member may be of square or circular cross-section.

The U-shaped conduit member is inclined to the vertical such that the inlet and outlet arms lie in a substantially vertical plane, but are inclined within such plane. The U-shaped conduit member may be inclined by about 45 degrees. According to the invention the inlet is at a level below the outlet arm.

The opening in the U-shaped conduit member may be in the region of the lowest portion of the U-shaped conduit member.

The location of the opening in the U-shaped member may be substantially in line with the direction of air flow into the U-shaped conduit member. That is, the centre of the opening may lie substantially on the axis of the inlet arm of the U-shaped conduit member.

The cross-sectional area of the opening may be substantially the same as the cross-sectional area of the inlet arm. Alternatively, the cross-sectional area of the opening may be greater than the cross-sectional area of the inlet arm. The opening may be a rectangular opening in a curved face of the U-shaped conduit member. A collar, for example a substantially rectangular collar, may extend downwardly from the U-shaped conduit member into the container

According to a another aspect of the present invention there is provided a method of operating a seed hopper for a strip tillage machine according to claim 8.

According to a further aspect of the present invention there is provided a strip tillage machine according to claim 9.

The machine may include a seed dispenser attached to the secondary seed hopper for precisely dispensing seeds to be sown and which delivers seeds individually to a seed delivery tube.

The primary seed hopper may be provided at a lower region thereof with a metering unit for supplying seed at a predetermined rate from the primary seed hopper. The metering unit may be set to ensure there is an excess of seed above that which is required for seed-sowing, for example the excess may be 10 to 15 percent above that which is required.

According to a another aspect of the present invention there is provided a method of operating a strip tillage machine as defined in claim 12.

For a better understanding of the present invention and to show more clearly how it may be carried into effect reference will now be made, by way of example, to the accompanying drawings in which:
Figure 1 is a perspective view of one embodiment of a strip tillage machine;
Figure 2 is a perspective view of one embodiment of a seed-sowing assembly forming part of the present invention;
Figure 3 is a side view from an opposite side of the seed-sowing assembly shown in Figure 2;
Figure 4 diagrammatically illustrates a seed distribution system forming part of the present invention;
Figure 5 is a perspective view of a secondary seed hopper forming part of the present invention; and
Figure 6 is a sectional view through the secondary seed hopper shown in Figure 5.

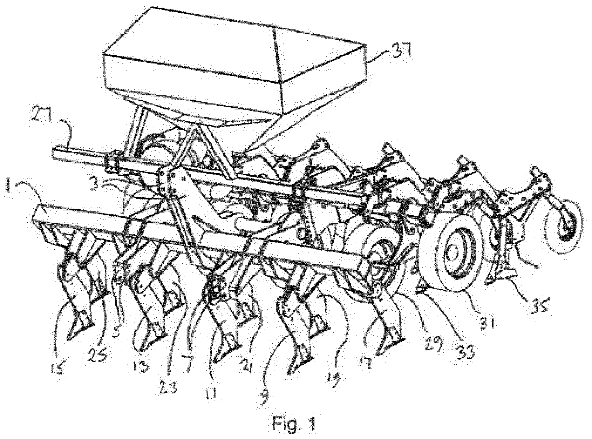

Figure 1 shows part of a known strip tillage machine which is intended to be drawn by a tractor, connected to the attachment points of a three-point linkage thereon. The machine comprises a transversely extending box-section front frame member 1, provided centrally with a spaced parallel pair of forwardly and upwardly extending upper attachment plates 3 and with respective pairs of forwardly and slightly downwardly extending lower attachment plates 5, 7 which are spaced outwardly of the plates 3. The free ends of the attachment plates 3, 5, 7 are in practice provided with respective attachment formations, not shown, for engagement with complementary formations on corresponding upper and spaced lower links of the three-point linkage of the tractor.

The frame member 1 carries a plurality (nine as illustrated) of soil-loosening members in the form of sub-soiling legs (or tines). The legs are spaced from one another transversely of the machine and arranged in a plurality (two as illustrated) of rows spaced from one another forwardly and rearwardly of the machine. A forewardmost row comprises four such legs 9, 11, 13, 15 while the rearmost row comprises five such legs 17, 19, 21, 23, 25. The legs 9 to 25 on each row are mounted a constant distance apart from one another, for example about 660mm, and the legs in the two rows are staggered relative to one another so that the spacing between adjacent legs, in a direction transverse of the machine, may be about 330mm. The legs may be provided at their lowermost ends with soil loosening feet which include a forwardly-extending pointed part from which lateral winglets extend. The negative rake of the legs, that is their rearwards inclination to their free end, gives the leading edge of the leg a clod-crushing effect and deflects crop residues, while the winglets at the foot displace soil upwardly and loosen it at plant root depth.

The machine comprises a box-section transverse rear frame member 27, disposed rearwardly of the front frame member 1. Although not shown, the two frame members are connected together by chassis members which extend rearwardly from the frame member 1 and further chassis members which extend forwardly from the frame member 27 connected together in such a way as to provide for relative adjustment of the positions of the frame members 1 and 27. Frame member 27 carries a plurality of rotary members for crumbling/packing soil loosened by the respective sub-soiling legs, each rotary member being in the form of a wheel carrying a pneumatic tyre of suitable tread profile. The wheels comprise a first transverse row of wheels 29 in line with and spaced rearwardly of the legs 9, 11, 13, 15 and a rearmost row of wheels 31 spaced rearwardly of and in line with the legs 17, 19, 21, 23, 25.

The rear frame member 27 also provides a mounting for respective seed sowing assemblies which follow the respective wheels, spaced behind the wheels in the normal operative direction of movement of the machine. The seed-sowing assemblies are spaced transversely of the machine at the same spacing as the wheels and, like the wheels, are staggered relative to one another, being arranged in two rows. Hence there is a forward row of seed-sowing assemblies 33 and a rear row of seed-sowing assemblies 35.

The machine is provided with a primary seed hopper 37 for seed to be sown. The seed hopper 37 is essentially of known type and may be mounted in any suitable disposition relative to the machine, for example on the rear frame member 27.

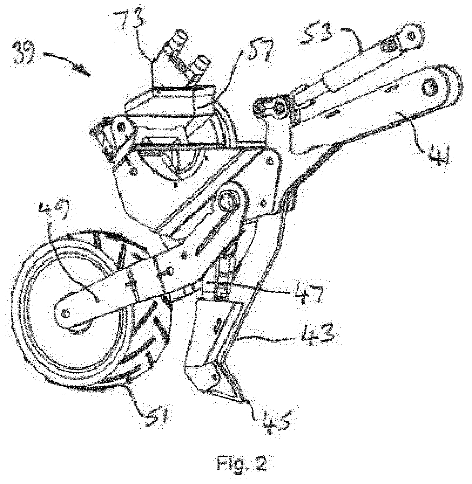

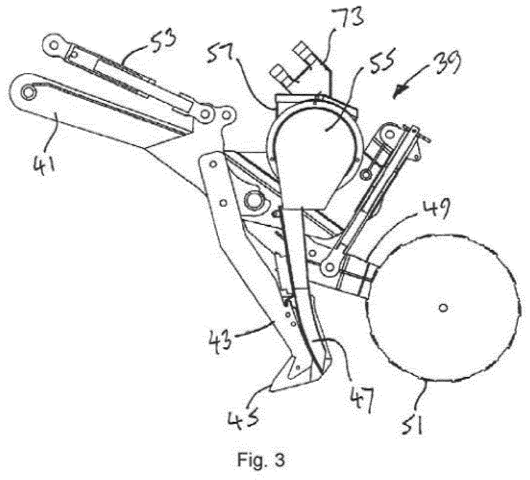

The seed-sowing assembly 39 shown in Figures 2 and 3 and forming part of the present invention is a modification of the known seed-sowing assemblies 33, 35 shown in Figure 1. Seed-sowing assembly 39 comprises a member 41 which in practice can be connected to the rear frame member 27 by way of a substantially vertical pivot connection (not shown) to allow lateral pivoting movement of the seed-sowing assembly. The member 41 extends rearwardly and downwardly from the pivot connection and at its lower end terminates in a seed discharge coulter (tine) 43 which is of generally known configuration and having a forwardly facing part 45 which creates a space in the soil and, at its rear part, a seed delivery tube 47 which discharges seed into a space in the soil created by the forwardly facing part 45 of the coulter in known manner. A further member 49 extends rearwardly from the member 41 and carries a packing wheel 51 which is aligned with the coulter 43. An hydraulic or other spring 53 biases the seed-sowing assembly downwardly to maintain the coulter 43 at a desired level within the soil.

The seed-sowing assembly 39 includes a seed dispenser 55 for precisely dispensing seeds to be sown and which delivers seeds individually to the seed delivery tube 47. Such a seed dispenser is of known type. The seed-sowing assembly 39 also includes a secondary seed hopper 57 for containing a relatively small amount of seed, for example about 1 kg. The secondary seed hopper 57 is connected to the seed dispenser 55 so as to provide a constant supply of seed to be dispensed.

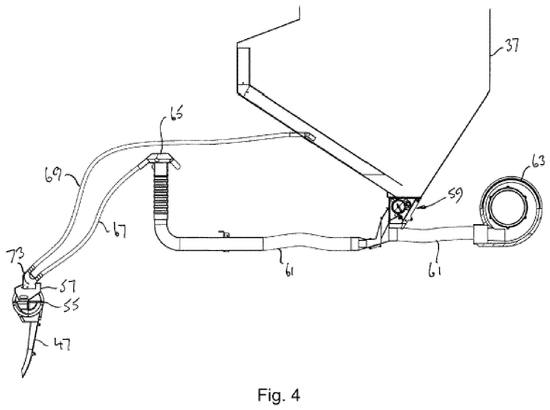

Figure 4 illustrates a seed dispensing system forming part of the present invention. Primary seed hopper 37 is provided at a lower region thereof with a metering unit 59 for supplying seed at a predetermined rate selected by a user of the machine. Seed exiting the metering unit 59 is entrained in a flow of air passing along a conduit 61 from an air pump 63. Conduit 61 may have a diameter in the range, for example, of 110 to 150 mm. In practice, the air pump is driven by hydraulic power from the tractor towing the machine. Conduit 61 conveys the seed to a conventional seed distributor head 65 where seed is divided between a plurality of further conduits 67, a single separate conduit being provided for each seed-sowing assembly 39. Conduits 67 may have a diameter in the range, for example, of 20 to 35 mm, in particular about 32 mm. So far, such an arrangement is conventional for the distribution of seed from the primary seed hopper 37 employing a seed distribution head.

It should be noted that in certain embodiments it may be possible to raise one of the sets of sub-soiling legs and the respective seed-sowing assembly such that only a portion of the overall number of sub-soiling legs and seed-sowing assemblies is in use. In such a case, it is also possible to control the seed distribution head such that seed is distributed only to the active seed-sowing assemblies.

Seed from the seed distribution head 65 is conveyed along conduit 67 to a single secondary seed hopper 57 and excess seed is returned directly to the primary seed hopper 37 by way of a return conduit 69, each secondary seed hopper being provided with a separate return conduit. Return conduit 69 may have substantially the same diameter as conduit 67. Excess seed in the return conduit 69 re-enters the primary seed hopper 37 at a level above the bottom thereof. The metering unit 59 is set to ensure there is an excess of seed above that which is required for the seed-sowing assemblies, for example there may be an excess of 10 to 15 percent above that which is required. However, the excess may be greater or less than this range. This arrangement ensures that all the secondary seed hoppers 57 are supplied with seed simultaneously. As a result of the excess of seed above that required and the simultaneous supply to all the secondary seed hoppers, it is possible to use the machine for sowing seed essentially as soon as seed supply is commenced and it is not necessary to wait until all the secondary seed hoppers have been filled with seed.

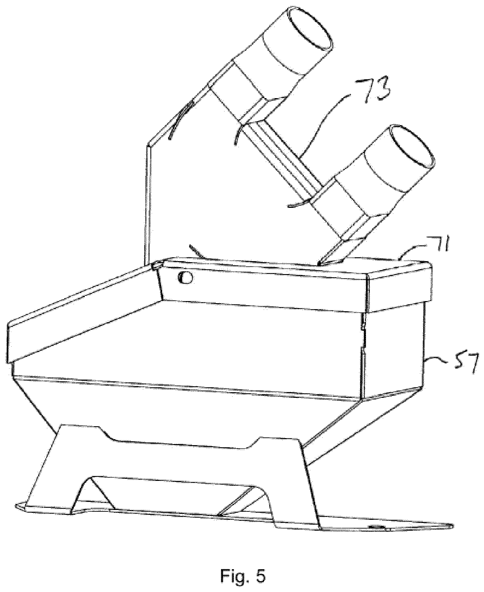

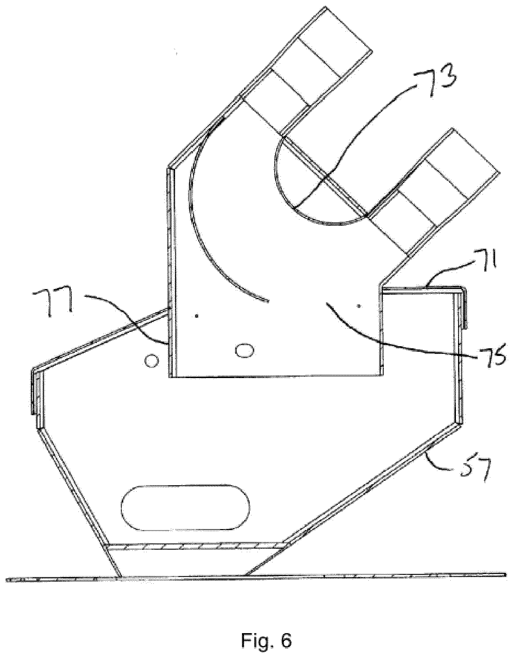

Connection of the conduits 67 and 69 is shown more particularly in Figures 5 and 6, the secondary seed hopper 57 being provided with a cover 71 to which the conduits 67, 69 are connected as shown best in Figure 4. The conduits are interconnected by way of a substantially U-shaped conduit member 73 which is attached to the cover 71 and effectively provides a through-flow connection for the seed being conveyed. The U-shaped conduit member is conveniently of square cross-section, although any other suitable cross-section, for example circular, may be employed. The U-shaped conduit member is shown as being inclined to the vertical such that inlet and outlet arms of the U-shaped conduit member lie in a substantially vertical plane, but are inclined within that plane, for example by about 45 degrees, however, inclination within such plane is not essential and, if provided need not be at 45 degrees. As illustrated, seed is conveyed to a lower inlet arm of the U-shaped conduit member 73 and returning seed is conveyed from an upper outlet arm of the U-shaped conduit member. However, these connections can be reversed and, where the arms are configured as upper and lower arms, seed can be conveyed to the upper arm and returning seed can be conveyed in the lower arm, which does not fall under the scope of the invention.

The U-shaped conduit member 73 is provided with an opening 75 in the wall thereof, the opening communicating directly with the interior of the secondary seed hopper 57. As illustrated, the opening is in the region of the lowest portion of the U-shaped conduit member, although this is not essential. The location of the opening is ideally substantially in line with the direction of air flow into the U-shaped conduit member. That is, the centre of the opening ideally lies substantially on the axis of the inlet arm 73 of the U-shaped conduit member, although a precise coaxial configuration is not essential. In this way, incoming seed is directed towards and through the opening 75 without being deflected from its incoming flow path. The configuration of the opening is not important provided sufficient seeds can exit the U-shaped conduit member to maintain sufficient seeds in the secondary seed hopper 57. Suitable sizes and shapes for the opening can readily be determined by experiment involving no inventive activity, but ideally the cross-sectional area of the opening is substantially the same as the cross-sectional area of the inlet arm or a little greater. Where the U-shaped conduit member is of square cross-section, the opening 75 may be a rectangular opening in the curved face of the U-shaped conduit member, but where the U-shaped conduit member has a different cross-section for example circular, the configuration of the opening will inevitably be more complex. If required, a collar 77, for example a substantially rectangular collar, may extend downwardly from the U-shaped conduit member into the secondary seed hopper 57, for example by about 20 mm, to guide seed exiting the opening 75 and accumulating in the secondary seed hopper.

In use of the secondary seed hopper 57, initially seed entrained in air enters the inlet arm of the U-shaped conduit member 73 from the conduit 67 and seed distribution head 65 and at least part of the air flow enters the secondary seed hopper together with the seed entrained therewith. Depending on the air flow rate, part of the initial air flow together with any seeds entrained therewith may return to the primary seed hopper 37 by way of the outlet arm of the U-shaped conduit member and the return conduit 69. Since the rate of provision of seeds exceeds the rate of dispensing of seeds from the secondary seed hopper, seeds accumulate in the secondary seed hopper and the level of seeds in the hopper rises even when the machine is in operation and sowing seeds. When the level of seeds in the secondary seed hopper reaches a certain level (for example, depending on the orientation of the U-shaped conduit member and the configuration of the opening 75) the seeds will progressively obstruct the opening 75. As the opening becomes progressively obstructed, the proportion of air flowing through the opening, together with any entrained seeds, progressively reduces, while the proportion of air flowing entirely through the U-shaped conduit member, together with any entrained seeds, progressively increases resulting in a higher proportion of the air flow and entrained seeds returning to the primary seed hopper 37. Consequently, the provision of U-shaped conduit member 73 with opening 75 effectively provides an adjustable valve mechanism involving no additional moving parts, adjustment of the valve mechanism being provided by the seeds entrained in the air flow itself and deposited in the secondary seed hopper.

## Claims

1. A seed hopper for a strip tillage machine, the hopper comprising a container (57) for seed, a cover (71) for the container, and a substantially U-shaped conduit member (73) having an inlet arm and an outlet arm, the substantially U-shaped conduit member (73) being attached to the cover (71) and being formed with an opening (75) communicating with the interior of the container (57) of the hopper,
wherein the inlet arm of the substantially U-shaped conduit member (73) is connected with a primary seed hopper (37) of a strip tillage machine in a manner allowing seeds to be conveyed from the primary seed hopper (37) to the inlet arm of the substantially U-shaped conduit member (73) and the outlet arm of the substantially U-shaped conduit member is connected with a primary seed hopper in a manner allowing seeds to be conveyed from the outlet arm of the substantially U-shaped conduit member (73) to the primary seed hopper (37), wherein preferably the seeds are conveyed entrained in air flow,
and wherein the substantially U-shaped conduit member (73) is inclined to the vertical, such that the inlet arm and the outlet arm lie in a substantially vertical plane, but are inclined within such plane, in such a way that the inlet arm is at a level below the outlet arm.

2. The seed hopper according to claim 1, wherein the substantially U-shaped conduit member (73) is inclined to the vertical by about 45 degrees.

3. The seed hopper according to any of claims 1 or 2, wherein the substantially U-shaped conduit member (73) is of square or circular cross-section.

4. The seed hopper according to any of claims 1-3, wherein the opening (75) in the substantially U-shaped conduit member (73) communicating with the interior of the container (57) of the hopper is located in the region of the lowest portion of the substantially U-shaped conduit member (73).

5. The seed hopper according to any of claims 1-4, wherein location of the opening (75) in the substantially U-shaped conduit member (73) communicating with the interior of the container (57) of the hopper is substantially in line with the direction of air flow conveying seeds into the substantially U-shaped conduit member, preferably the opening (75) lies substantially on the axis of the inlet arm of the substantially U-shaped conduit member (73).

6. The seed hopper according to any of claims 1-5, wherein the cross-sectional area of the opening (75) in the substantially U-shaped conduit member (73) communicating with the interior of the container (57) of the hopper is substantially the same as the cross-sectional area of the inlet arm or is greater than the cross-sectional area of the inlet arm.

7. The seed hopper according to any of claims 1-6, wherein the opening (75) in the substantially U-shaped conduit member (73) communicating with the interior of the container (57) of the hopper is a rectangular opening in a curved face of the substantially U-shaped conduit member (73) and wherein preferably a collar (77), for example a substantially rectangular collar, extends downwardly from the substantially U-shaped conduit member (73) into the interior of the hopper.

8. A method of operating a seed hopper for a strip tillage machine, the method comprising steps of supplying seed entrained in air to an inlet arm of a substantially U-shaped conduit member (73), having an inlet arm and an outlet arm, the substantially U-shaped conduit member (73) being attached to a cover (71) and being formed with an opening (75) communicating with the interior of a container (57) of the hopper;
wherein the substantially U-shaped conduit member (73) is inclined to the vertical, such that the inlet arm and the outlet arm lie in a substantially vertical plane, but are inclined within such plane, in such a way that the inlet arm is at a level below the outlet arm and wherein the U-shaped conduit member (73) allowing at least a part of the air flow to enter the interior of the container (57) of the seed hopper together with seed entrained therewith; and accumulating seed in the seed hopper such that, when a level of seed in the seed hopper reaches a predetermined level, the seed progressively obstructs the opening (75) in the substantially U-shaped conduit member (73) communicating with the interior of the container (57) of the hopper so as to progressively reduce the proportion of air and entrained seed flowing through the opening (75) and to progressively increase the proportion of air and entrained seed flowing out of the outlet arm of the substantially U-shaped conduit member (73).

9. A strip tillage machine comprising a primary seed hopper (37); a seed distributor head (65) having a seed inlet (61) and a plurality of seed outlets (47); wherein the strip tillage machine also comprises the secondary seed hopper (57) as defined in any of claims 1-7 for each seed outlet; the strip tillage machine additionally comprising a separate conduit (67) attached to each seed outlet for conveying seed from a respective seed outlet to the inlet arm of the respective secondary seed hopper (57), a separate conduit (69) attached to the outlet arm of the respective secondary seed hopper (57) for conveying excess seed back to the primary seed hopper (37); and an air pump (63) for conveying seed through the conduits from the primary seed hopper (37) in sequence to the seed distributor head (65) and to each secondary seed hopper (57) and for conveying excess seed from each secondary seed hopper (57) back to the primary seed hopper (37).

10. The strip tillage machine according to claim 9, wherein the machine includes a seed dispenser (55) attached to the secondary seed hopper (57) for precisely dispensing seeds to be sown and which delivers seeds individually to a seed delivery tube (47).

11. The strip tillage machine according to claim 9 or 10, wherein the primary seed hopper (37) is provided at a lower region thereof with a metering unit (59) for supplying seed at a predetermined rate from the primary seed hopper (37), wherein preferably the metering unit (59) may be set to ensure there is an excess of seed above that which is required for seed-sowing, for example the excess may be 10 to 15 percent above that which is required.

12. A method of operating a strip tillage machine as defined in any of claims 9-11, the method comprising steps of entraining seed from the primary seed hopper (37) in an air flow and conveying the seed in the air flow to the seed distributor head (65); separating the air flow and entrained seed into individual flows for each seed outlet of the seed distributor head (65); conveying the air flow and entrained seed from each seed outlet, to the inlet arm of a respective secondary seed hopper (57); allowing at least a part of the air flow to enter the respective secondary seed hopper (57) together with seed entrained therewith; accumulating seed in the respective secondary seed hopper (57) such that, when a level of seed in the respective secondary seed hopper(57) reaches a predetermined level, the seed progressively obstructs the opening (75) in the U-shaped conduit member (73) so as to progressively reduce the proportion of air and entrained seed flowing through the opening and to progressively increase the proportion of air and entrained seed flowing out of the outlet arm; and conveying air and excess seed flowing out of the outlet arm directly back to the primary seed hopper (37).

## Patentansprüche

1. Ein Saatgutbehälter für eine Streifenbodenbearbeitungsmaschine, herausgebildet als ein Behälter mit einem Vorratsbehälter (57) für das Saatgut, mit einem Deckel (71) für den Vorratsbehälter sowie mit einem U-förmigen Führungselement (73) mit jeweils einem Zu- und einem Auslaufarm, wobei das U-förmige Führungselement (73) am Deckel (71) befestigt ist und eine Öffnung (75) aufweist, die mit dem Innenraum des Vorratsbehälters (57) in Verbindung steht,
wobei der Zulaufarm des U-förmigen Führungselements (73) mit einem primären Saatgutbehälter (37) der Streifenbodenbearbeitungsmaschine in einer Art und Weise verbunden ist, dass das Saatgut aus dem primären Saatgutbehälter (37) zum Zulaufarm des U-förmigen Führungselements (73) befördert werden kann und der Auslaufarm des U-förmigen Führungselements mit dem primären Saatgutbehälter in einer Art und Weise verbunden ist, dass das Saatgut aus dem Auslaufarm des U-förmigen Führungselements (73) zu dem primären Saatgutbehälter (37) befördert werden kann, wobei die Samen vorzugsweise durch Luftstrom mitgerissen und befördert werden,
wobei das U-förmige Führungselement (73) vertikal geneigt ist, so dass der Zu- und der Auslaufarm in einer beinah vertikalen Ebene liegen, aber innerhalb dieser Ebene derart geneigt sind, dass der Zulaufarm unterhalb des Auslaufarms liegt.

2. Der Saatgutbehälter nach Anspruch 1, wobei das U-förmige Führungselement (73) um etwa 45 Grad in vertikaler Richtung geneigt ist.

3. Der Saatgutbehälter nach einem der Ansprüche 1 oder 2, wobei das U-förmige Führungselement (73) einen quadratischen oder runden Querschnitt aufweist.

4. Der Saatgutbehälter nach einem der Ansprüche 1-3, wobei die Öffnung (75) im U-förmigen Führungselement (73), das mit dem Innenbereich des Vorratsbehälters (57) in Verbindung steht, im Bereich des untersten Abschnitts des U-förmigen Führungselements (73) angeordnet ist.

5. Der Saatgutbehälter nach einem der Ansprüche 1-4, wobei die Anordnung der Öffnung (75) im U-förmigen Führungselement (73), das mit dem Innenbereich des Vorratsbehälters (57) in Verbindung steht, grundsätzlich mit der Richtung der Luftströmung übereinstimmt, mit der das Saatgut in das U-förmige Führungselement befördert wird, wobei die Öffnung (75) vorzugsweise auf der Achse des Zulaufarms des jeweiligen U-förmigen Führungselements (73) liegt.

6. Der Saatgutbehälter nach einem der Ansprüche 1-5, wobei die Querschnitt der Öffnung (75) in dem U-förmigen Führungselement (73), das mit dem Innenbereich des Vorratsbehälters (57) in Verbindung steht, grundsätzlich dem Querschnitt des Zulaufarms entspricht oder größer ist als der Querschnittdes Zulaufarms.

7. Der Saatgutbehälter nach einem der Ansprüche 1-6, wobei die Öffnung (75) im U-förmigen Führungselement (73), das mit dem Innenbereich des Vorratsbehälters (57) in Verbindung steht, als eine rechteckige Öffnung in einer gebogenen Seitenfläche des U-förmigen Führungselements (73) herausgebildet ist und wobei sich vorzugsweise ein Kragen (77), beispielsweise ein grundsätzlich rechteckiger Kragen von dem U-förmigen Führungselement (73) nach unten in den Innenbereich des Behälters erstreckt.

8. Verfahren zum Betrieben eines Saatgutbehälters für eine Streifenbodenbearbeitungsmaschine, wobei das Verfahren folgende Schritte umfasst Schritte zur Beförderung von Saatgut mit der Luftströmung bis zum Zulaufarm des U-förmigen Führungselements (73), das jeweils einen Zu- und einen Auslaufarm aufweist, wobei das U-förmige Führungselement (73) am Deckel (71) befestigt ist
und mit einer Öffnung (75) herausgebildet ist, die mit dem Innenbereich des Vorratsbehälters (57) in Verbindung steht;
wobei das U-förmige Führungselement (73) in einer Art und Weise vertikal geneigt ist, so dass der Zu- und der Auslaufarm in einer beinah vertikalen Ebene liegen, aber innerhalb dieser Ebene derart geneigt sind, dass der Zulaufarm unterhalb des Auslaufarms liegt und wobei das U-förmige Führungselement (73) lässt zu, dass zumindest ein Teil des Luftstroms in den Innenbereich des Vorratsbehälters (57) zusammen mit dem mitbeförderten Saatgut fließt; das Saatgut wird anschließend im Saatgutbehälter gesammelt, so dass das Saatgut darin einen bestimmter Pegel erreicht, dann wird die Öffnung (75) im U-förmigen Führungselement (73), das in Verbindung mit dem Innenbereich des Vorratsbehälters (57) steht, allmählich versperrt, um das Verhältnis zwischen Luft und dem durch die Öffnung (75) beförderten Saatgut allmählich reduziert wird und das Verhältnis zwischen Luft und dem durch den Auslaufarm des U-förmigen Führungselements (73) fließenden Saatgut allmählich erhöht werden.

9. Eine Streifenbodenbearbeitungsmaschine, die mit einem primären Saatgutbehälter (37); einem Saatgutverteilerkopf (65) mit einem Saatgutzulauf (61) und einer Vielzahl von Saatgutausläufen (47) ausgestattet ist; wobei die Streifenbodenbearbeitungsmaschine auch mit einem sekundären Saatgutbehälter (57) ausgestattet ist, wie er in einem der Ansprüche 1-7 für jeden Saatgutauslauf definiert ist; wobei die Streifenbodenbearbeitungsmaschine zusätzlich mit einer separaten Leitung (67) ausgestattet ist, die an jedem Saatgutauslauf angebracht ist, um das Saatgut von dem jeweiligen Auslauf zum Zulaufarm des jeweiligen sekundären Saatgutbehälters (57) zu befördern, mit einer separaten Leitung (69), die an dem Auslaufarm des jeweiligen sekundären Saatgutbehälters (57) befestigt ist, um das überschüssige Saatgut zurück zu dem primären Saatgutbehälter (37) zu befördern; sowie mit einer Luftpumpe (63) zum Befördern von Saatgut durch die Leitungen vom primären Saatgutbehälter (37) zum Saatgutverteilerkopf (65) und zu jedem sekundären Saatgutbehälter (57) und zum Befördern vom überschüssigen Saatgut von jedem sekundären Saatgutbehälter (57) zurück zum primären Saatgutbehälter (37).

10. Die Streifenbodenbearbeitungsmaschine nach Anspruch 9, wobei die Maschine einen am sekundären Saatgutbehälter (57) angebrachten Saatgutspender (55) zur präzisen Abgabe des auszusäenden Saatguts aufweist, der das Saatgut einzeln an das Saatgutzufuhrrohr (47) abgibt.

11. Die Streifenbodenbearbeitungsmaschine nach Anspruch 9 oder 10, wobei der primäre Saatgutbehälter (37) im unteren Bereich mit einem Verteiler (59) zum Verteilen von Saatgut mit einer vorbestimmten Geschwindigkeit vom primären Saatgutbehälter (37) versehen ist, wobei der Verteiler (59) vorzugsweise so eingestellt werden kann, dass es sichergestellt ist, dass ein Überschuss am Saatgut über dem aktuellen Aussaatbedarf, zum Beispiel 10 bis 15 Prozent über dem erforderlichen Überschuss liegen kann.

12. Verfahren der Anwendung für die Streifenbodenbearbeitungsmaschine nach einem von Ansprüchen 9-11, die Entnahme vom Saatgut aus dem primären Saatgutbehälter (37) mit dem Luftstrom sowie Beförderung mit dem Luftstrom zum Saatgutverteilerkopf (65) umfasst; Trennung des Luftstroms sowie des beförderten Saatguts in separate Ströme für den Saatgutauslauf sowie den Saatgutverteilerkopf (65); Beförderung mit dem Luftstrom und dem Saatgut aus jedem Saatgutauslauf zum Zulaufarm am jeweiligen sekundären Saatgutbehälters (57); was dazu führen soll, dass zumindest ein Teil des Luftstroms zusammen mit dem beförderten Saatgut dem jeweiligen sekundären Saatgutbehälter (57) zugeführt wird; in dem sekundären Saatgutbehälter (57) wird das Saatgut gesammelt, so dass das Saatgut allmählich die Öffnung (75) in dem U-förmigen Leitungselement (73) versperren wird, wenn der Saatgutpegel in dem jeweiligen sekundären Saatgutbehälter (57) einen vorbestimmten Sollwert erreicht, um das Verhältnis zwischen der Luft und dem beförderten Saatgut, das durch die Öffnung strömt, allmählich zu verringern und das Verhältnis zwischen der Luft und dem beförderten Saatgut, das aus dem Auslaufarm herausströmt, allmählich zu erhöhen; und um den Luftstrom und das überschüssigen Saatgut, das aus dem Auslaufarm herausströmt, direkt zurück in den primären Saatgutbehälter (37) zu befördern.

## Revendications

1. Trémie de semences pour une machine de travail du sol en bande, la trémie comprenant un récipient (57) pour les semences, un couvercle (71) pour le récipient et un élément de conduit sensiblement en forme de U (73) ayant un bras d'entrée et un bras de sortie, l'élément de conduit sensiblement en forme de U (73) étant fixé au couvercle (71) et étant formé avec une ouverture (75) communiquant avec l'intérieur du récipient (57) de la trémie, dans laquelle le bras d'entrée de l'élément de conduit sensiblement en forme de U (73) est connecté à une trémie de semences primaire (37) d'une machine de travail du sol en bande d'une manière permettant aux semences d'être transportées de la trémie de semences primaires (37) au bras d'entrée de l'élément de conduit sensiblement en forme de U (73) et le bras de sortie de l'élément de conduit sensiblement en forme de U est connecté à une trémie de semences primaire d'une manière permettant aux semences d'être transportées du bras de sortie de l'élément de conduit sensiblement en forme de U (73) vers la trémie de semences primaire (37), dans laquelle, de préférence, les semences sont transportées, entraînées dans un flux d'air,
et dans laquelle l'élément de conduit sensiblement en forme de U (73) est incliné par rapport à la verticale, de telle sorte que le bras d'entrée et le bras de sortie se trouvent dans un plan sensiblement vertical, mais ils sont inclinés dans un tel plan, de telle sorte que le bras d'entrée se trouve à un niveau inférieur à celui du bras de sortie.

2. Trémie de semences selon la revendication 1, dans laquelle l'élément de conduit sensiblement en forme de U (73) est incliné par rapport à la verticale d'environ 45 degrés.

3. Trémie de semences selon l'une quelconque des revendications 1 ou 2, dans laquelle l'élément de conduit sensiblement en forme de U (73) a une section transversale carrée ou circulaire.

4. Trémie de semences selon l'une quelconque des revendications 1 à 3, dans laquelle l'ouverture (75) dans l'élément de conduit sensiblement en forme de U (73) communiquant avec l'intérieur du récipient (57) de la trémie est située dans la zone de la partie la plus basse de l'élément de conduit sensiblement en forme de U (73).

5. Trémie à semences selon l'une quelconque des revendications 1 à 4, dans laquelle l'emplacement de l'ouverture (75) dans l'élément de conduit sensiblement en forme de U (73) communiquant avec l'intérieur du conteneur (57) de la trémie est sensiblement aligné avec la direction du flux d'air transportant les semences dans le membre du conduit sensiblement en forme de U, de préférence, l'ouverture (75) se situe sensiblement dans l'axe du bras d'entrée de l'élément de conduit sensiblement en forme de U (73).

6. Trémie de semences selon l'une quelconque des revendications 1 à 5, dans laquelle la section transversale de l'ouverture (75) dans l'élément de conduit sensiblement en forme de U (73) communiquant avec l'intérieur du récipient (57) de la trémie est sensiblement la même que la section transversale du bras d'entrée ou est supérieure à la section transversale du bras d'entrée.

7. Trémie de semences selon l'une quelconque des revendications 1 à 6, dans laquelle l'ouverture (75) dans l'élément de conduit sensiblement en forme de U (73) communiquant avec l'intérieur du conteneur (57) de la trémie est une ouverture rectangulaire dans une face incurvée de l'élément de conduit sensiblement en forme de U (73) et dans laquelle, de préférence, un collier (77), par exemple un collier sensiblement rectangulaire, s'étend vers le bas depuis l'élément de conduit sensiblement en forme de U (73) à l'intérieur de la trémie.

8. Procédé de fonctionnement d'une trémie de semences pour une machine de travail du sol en bande, le procédé comprenant les étapes d'acheminement de semences entraînées dans l'air à un bras d'entrée d'un élément de conduit sensiblement en forme de U (73), ayant un bras d'entrée et un bras de sortie, l'élément de conduit sensiblement en forme de U (73) étant fixé au couvercle (71) et étant formé avec une ouverture (75) communiquant avec l'intérieur d'un récipient (57) de la trémie; dans laquelle l'élément de conduit sensiblement en forme de U (73) est incliné à la verticale, de telle sorte que le bras d'entrée et le bras de sortie se trouvent dans un plan sensiblement vertical, mais sont inclinés à l'intérieur de ce plan, de telle sorte que le bras d'entrée se trouve à un niveau inférieur à celui du bras de sortie, et dans laquelle l'élément de conduit en forme de U (73) permet à au moins une partie du flux d'air de pénétrer à l'intérieur du récipient (57) de la trémie de semences avec les semences entraînée avec celle-ci ; et accumuler des semences dans la trémie de semences de telle sorte que, lorsqu'un niveau de semences dans la trémie de semences atteint un niveau prédéterminé, les semences obstruent progressivement l'ouverture (75) dans l'élément de conduit sensiblement en forme de U (73) communiquant avec l'intérieur du récipient (57) de la trémie de manière à réduire progressivement la proportion d'air et de semences entraînées qui s'écoulent à travers l'ouverture (75) et pour augmenter progressivement la proportion d'air et de semences entraînées qui s'écoulent hors du bras de sortie de l'élément de conduit sensiblement en forme de U (73).

9. Machine de travail du sol en bande comprenant une trémie de semences primaire (37) ; une tête de distribution de semences (65) ayant une entrée de semences (61) et une pluralité de sorties de semences (47) ; la machine de travail du sol en bande comprend également la trémie de semences secondaire (57) telle que définie dans l'une quelconque des revendications 1 à 7 pour chaque sortie de semences ; la machine de travail du sol en bande comprenant en outre un conduit séparé (67) fixé à chaque sortie de semences pour transporter les semences d'une sortie de semences respective vers le bras d'entrée de la trémie de semences secondaire respective (57), un conduit séparé (69) attaché au bras de sortie de la trémie de semences secondaire respective (57) pour renvoyer l'excès de semences vers la trémie de semences principale (37) ; et une pompe à air (63) pour acheminer des semences à travers les conduits de la trémie de semences primaire (37) en séquence à la tête de distribution de semences (65) et à chaque trémie de semences secondaire (57) et pour ramener l'excès de semences de chaque trémie de semences secondaire (57) vers la trémie de semences primaire (37).

10. Machine de travail du sol en bandes selon la revendication 9, dans laquelle la machine comprend un distributeur de semences (55) fixé à la trémie de semences secondaire (57) pour distribuer avec précision les semences à semer et qui délivre les semences individuellement dans un tube de distribution de semences (47).

11. Machine de travail du sol en bande selon la revendication 9 ou 10, dans laquelle la trémie de semences primaire (37) est munie dans une zone inférieure de celle-ci d'une unité de dosage (59) pour fournir des semences à un débit prédéterminé à partir de la trémie de semences primaire (37), dans laquelle, de préférence, l'unité de dosage (59) peut être réglée pour garantir qu'il y a un excès de semences au-dessus de ce qui est requis pour le semis, par exemple, l'excès peut être de 10 à 15 % supérieur à ce qui est requis.

12. Procédé de fonctionnement d'une machine de travail du sol en bande telle que définie dans l'une quelconque des revendications 9-11, le procédé comprenant les étapes d'entraîner les semences de la trémie de semences primaire (37) dans un flux d'air et à transporter les semences dans le flux d'air vers la tête de distribution de semences (65) ; diviser le flux d'air et les semences entraînées en flux individuels pour chaque sortie de semences de la tête de distribution de semences (65) ; acheminer le flux d'air et les semences entraînées depuis chaque sortie de semences vers le bras d'entrée d'une trémie de semences secondaire (57) respective; laisser à au moins une partie du flux d'air pénétrer dans la trémie de semences secondaire respective (57) avec les graines entraînées avec celle-ci ; accumuler des semences dans la trémie de semences secondaire (57) respective de telle sorte que, lorsqu'un niveau de semences dans la trémie de semences secondaire (57) respective atteint un niveau prédéterminé, les semences obstruent progressivement l'ouverture (75) dans l'élément de conduit en forme de U (73) de manière à réduire progressivement la proportion d'air et des semences entraînés qui s'écoulent à travers l'ouverture et d'augmenter progressivement la proportion d'air et de semences entraînés qui sortent du bras de sortie ; et acheminer l'air et les semences en excès sortant du bras de sortie directement vers la trémie primaire (37).
